# EUROPEAN PATENT APPLICATION

(11) **EP 1 725 011 A1**
(43) Date of publication of application: **22.11.2006**
(21) Application number: 06252579.5
(22) Date of filing: 17.05.2006
(51) Int. Cl.: H04N 1/00, G03G 21/04

(54) **Image forming apparatus with copy prohibition function**

(30) Priority: 19.05.2005 JP 2005147101
(71) Applicant: Ricoh Company, Ltd., Tokyo 143-8555 (JP)
(72) Inventor: Matsuda, Kohji, Tokyo (JP)
(74) Representative: Leeming, John Gerard

(57) **Abstract**

An image forming apparatus for forming an image on a transfer sheet by transferring a toner image on a photoconductor to the transfer sheet is disclosed. The image forming apparatus (100) includes an image reading part (102) for reading image data from a target document, an image determination part (104) for determining whether the image data read by the image reading part include output prohibited data, and a control part (105) for preventing application of toner to the photoconductor when the image determination part determines that the image data read by the image reading part include the output prohibited data.

## Description

The present invention relates to an image forming apparatus, an image forming method, and a computer-readable recording medium, and more particularly to an image forming apparatus, an image forming method, and a computer-readable recording medium for controlling image data output, for example, in a case where a target document is a copy-prohibited document.

Conventionally, an image forming apparatus, which is capable of preventing illegal copying, determines whether a target document is a special document containing copy-prohibited images by using a pattern matching method and prevents copying of the target document when the image forming apparatus determines that the target document is a special document. Such an image forming apparatus uses a similarity degree as the criterion for determining whether the target image is a special document. However, various problems may occur depending on how the similarity degree is set. For example, in a case where a special document is determined to be an ordinary document, copying of the special document cannot by prevented. In a case where an ordinary document is determined to be a special document, the ordinary document cannot be copied.

In order to solve such problems, Japanese Laid-Open Patent Application No.6-125459 discloses an image forming apparatus that can prevent copying of a special document without having to restrict the copying of ordinary documents and that is operable to trace a copied special document in a case where the special document is copied.

In a case where the target document is determined to be a special document, the image forming apparatus disclosed in Japanese Laid-Open Patent Application No.6-125459 stops copying the special document upon receiving a notice that the special document cannot be copied during an image forming process. Therefore, in a case where the image forming apparatus starts image informing, before it completes the process of determining whether the target document is a special document (for the sake of saving output time), the image information that is already written onto the photoconductor before the determination may become unnecessary when the target document is determined to be a special document. In such a case, the toner used for writing the image information is wasted.

Furthermore, with respect to the areas of the photoconductor or the transfer paper on which the image information of the special document written before the target document is determined to be a special document, such areas are required to be covered up (smeared over) once the target document is determined to be a special document. This results in a large waste of toner.

Embodiments of the present invention provide an image forming apparatus, an image forming method, and a computer-readable recording medium that solve or reduce one or more of the above problems caused by the limitations and disadvantages of the related art.

Features and advantages of the present invention will be set forth in the description which follows, and in part will become apparent from the description and the accompanying drawings, or may be learned by practice of the invention according to the teachings provided in the description. Objects as well as other features and advantages of the present invention will be realized and attained by an image forming apparatus, an image forming method, and a computer-readable recording medium particularly pointed out in the specification in such full, clear, concise, and exact terms as to enable a person having ordinary skill in the art to practice the invention.

To achieve these and other advantages and in accordance with the purpose of the invention, as embodied and broadly described herein, an embodiment of the present invention provides an image forming apparatus for forming an image on a transfer sheet by transferring a toner image on a photoconductor to the transfer sheet, the image forming apparatus including: an image reading part for reading image data from a target document; an image determination part for determining whether the image data read by the image reading part include output prohibited data; and a control part for preventing application of toner to the photoconductor when the image determination part determines that the image data read by the image reading part include the output prohibited data.

Accordingly, since a process of developing image data by applying toner to the photoconductor can be omitted in a case where the image determination part determines that the image data read by the image reading part include output prohibited data, toner can be prevented from being wasted.

In the image forming apparatus according to an embodiment of the present invention, the image forming apparatus may further include: a transfer sheet conveyance control part for conveying the transfer sheet to a standby position when the image reading part begins reading image data from the target document; wherein the control part may instruct the transfer sheet conveyance control part to eject the transfer sheet without transferring the image data to the transfer sheet in a case where the control part prevents the application of toner.

Accordingly, since the transfer sheet can be ejected without having image data transferred in a case where the control part prevents the application of toner, transfer paper can be prevented from being wasted.

In the image forming apparatus according to an embodiment of the present invention, the image forming apparatus may further include: an image output part for outputting the image data read by the image reading part in a case where the image determination part determines that the image data read by the image reading part do not include output prohibited data.

Accordingly, since the image data read by the image reading part is output by the image output part in a case where the image determination part determines that the image data read by the image reading part do not include output prohibited data, a target document other than a copy-prohibited document can be copied without wasting toner.

In the image forming apparatus according to an embodiment of the present invention, the image forming apparatus may further include: a mode determination part for determining whether the image determination part is in an image determination mode for determining whether the image data are output prohibited data; and an image storage part for storing the image data read by the image reading part in a case where the mode determination part determines that the image determination part is in the image determination mode; wherein the control part may prevent the application of the toner that corresponds to the image data stored in the image storage part in a case where the image determination part determines that the image data are output prohibited data.

Accordingly, the process of determining whether the image data are output prohibited data can be executed when the user chooses to set the image determination part to the image determination mode. Therefore, the process time for performing the image formation process can be reduced by omitting the process of determining whether the image data are output prohibited data when the user does not set the image determination part to the image determination mode.

In the image forming apparatus according to an embodiment of the present invention, the control part may permit the application of toner in a case where the mode determination part determines that the image determination part is not in the image determination mode.

Accordingly, the speed for outputting the image data can be increased since the image data can be output immediately after reading the image data without executing the process of determining whether the image data are output prohibited data when the user does not set the image determination part to the image determination mode.

In the image forming apparatus according to an embodiment of the present invention, the image forming apparatus may further include: an image changing part for changing the image data stored in the image storage part into indecipherable image data in a case where the image determination part determines that the image data include output prohibited data.

Accordingly, since indecipherable image data are overwritten with respect to the image data stored in the image storage part, valid image data will not be obtained even in a case where access is made to the image storage part. Therefore, output prohibited data in a copy-prohibited document can be managed under high security.

In the image forming apparatus according to an embodiment of the present invention, the image determination part may determine whether the image data include output prohibited data with respect to each part of the target document, wherein when the image determination part determines that a predetermined part of the target document includes output prohibited data, the image changing part may change the image data corresponding to the predetermined part of the target document into indecipherable image data.

Accordingly, since indecipherable image data items are overwritten with respect to the image data items stored in the image storage part corresponding to each part of the target document, valid image data will not be obtained even in a case where access is made to the image storage part. Therefore, output prohibited data in a copy-prohibited document can be managed under high security.

In the image forming apparatus according to an embodiment of the present invention, the image changing part may change the image data stored in the image storage part into indecipherable image data by overwriting the image data with black color data.

Accordingly, since indecipherable image data of black color data are overwritten with respect to the image data stored in the image storage part, valid image data will not be obtained even in a case where access is made to the image storage part. Therefore, output prohibited data in a copy-prohibited document can be managed under high security.

In the image forming apparatus according to an embodiment of the present invention, the image forming apparatus may further include an image erasing part for erasing the image data stored in the image storage part in a case where the image determination part determines that the image data include output prohibited data.

Accordingly, since the image data items stored in the image storage part can be erased, valid image data will not be obtained even in a case where access is made to the image storage part. Therefore, output prohibited data in a copy-prohibited document can be managed under higher security.

In the image forming apparatus according to an embodiment of the present invention, the image determination part may determine whether the image data include output prohibited data with respect to each part of the target document, wherein when the image determination part determines that a predetermined part of the target document include output prohibited data, the image erasing part may erase the image data corresponding to the predetermined part of the target document.

Accordingly, since the image data items stored in the image storage part corresponding to each part of the target document can be erased, valid image data will not be obtained even in a case where access is made to the image storage part. Therefore, output prohibited data in a copy-prohibited document can be managed under higher security.

Furthermore, another embodiment of the present invention provides an image forming apparatus for forming an image on a transfer sheet by transferring a latent image on a photoconductor to the transfer sheet, the image forming apparatus including: an image reading part for reading image data from a target document; an image determination part for determining whether the image data read by the image reading part include output prohibited data; and a control part for preventing formation of the latent image on the photoconductor when the image determination part determines that the image data read by the image reading part include the output prohibited data.

Accordingly, since a process of developing image data by applying toner to the photoconductor can be omitted by preventing formation of a latent image on the photoconductor in a case where the image determination part determines that the image data read by the image reading part include output prohibited data, toner can be prevented from being wasted.

Furthermore, another embodiment of the present invention provides an image forming method for forming an image on a transfer sheet by transferring a toner image on a photoconductor to the transfer sheet, the image forming method including the steps of: a) reading image data from a target document; b) determining whether the image data read in step a) include output prohibited data; and c) preventing application of toner to the photoconductor when the image data read in step a) are determined to include output prohibited data.

Accordingly, since a process of developing image data by applying toner to the photoconductor can be omitted in a case where the image determination step determines that the image data read by the image reading step include output prohibited data, toner can be prevented from being wasted.

Furthermore, another embodiment of the present invention provides an image forming method for forming an image on a transfer sheet by transferring a latent image on a photoconductor to the transfer sheet, the image forming method including the steps of: a) reading image data from a target document; b) determining whether the image data read in step a) include output prohibited data; and c) preventing formation of the latent image on the photoconductor when the image data read in step a) are determined to include output prohibited data.

Accordingly, since a process of developing image data by applying toner to the photoconductor can be omitted by preventing formation of a latent image on the photoconductor in a case where the image determination step determines that the image data read by the image reading step include output prohibited data, toner can be prevented from being wasted.

Furthermore, another embodiment of the present invention provides a computer-readable recording medium on which a program is recorded for causing an image forming apparatus to execute a method for forming an image on a transfer sheet by transferring a toner image on a photoconductor to the transfer sheet, the method including the steps of: a) reading image data from a target document; b) determining whether the image data read in step a) include output prohibited data; and c) preventing application of toner to the photoconductor when the image data read in step a) are determined to include output prohibited data.

Accordingly, since a process of developing image data by applying toner to the photoconductor can be omitted via a computer-readable recoding medium in a case where the image determination step determines that the image data read by the image reading step include output prohibited data, toner can be prevented from being wasted.

Furthermore, another embodiment of the present invention provides a computer-readable recording medium on which a program is recorded for causing an image forming apparatus to execute a method for forming an image on a transfer sheet by transferring a latent image on a photoconductor to the transfer sheet, the method including the steps of: a) reading image data from a target document; b) determining whether the image data read in step a) include output prohibited data; and c) preventing formation of the latent image on the photoconductor when the image data read in step a) are determined to include output prohibited data.

Accordingly, since a process of developing image data by applying toner to the photoconductor can be omitted via a computer-readable recoding medium by preventing formation of a latent image on the photoconductor in a case where the image determination step determines that the image data read by the image reading step include output prohibited data, toner can be prevented from being wasted.

Other objects and further features of the present invention will be apparent from the following detailed description when read in conjunction with the accompanying drawings.
Fig.1 is a block diagram showing an image forming apparatus according to an embodiment of the present invention;
Fig.2 is a block diagram showing an exemplary configuration of an embedded pattern recognition part according to an embodiment of the present invention;
Figs.3A-3C are flowcharts showing steps of an image forming operation executed by an operation part, an image reading part, a transfer sheet conveyance control part, an embedded pattern recognition part, a control part, and an image output part according to a first embodiment of the present invention;
Fig.4 is a flowchart showing the steps of an embedded pattern recognition operation executed by an embedded pattern recognition part according to an embodiment of the present invention;
Fig.5A is a schematic drawing for describing an example of detecting isolated pixels in a block of an image data item having d pixels in a main scanning direction and l lines in the sub-scanning direction (d× l) according to an embodiment of the present invention;
Fig.5B is a schematic drawing for describing an example of detecting isolated pixels in a block having Bd × L1 pixels according to an embodiment of the present invention;
Fig.5C is a schematic drawing showing exemplary embedded patterns according to an embodiment of the present invention;
Fig.6 is a schematic drawing showing an exemplary hardware configuration of an image forming apparatus according to an embodiment of the present invention;
Fig.7 is an outside view of a copier 1000 including an image forming apparatus according to an embodiment of the present invention;
Fig.8 is a schematic view showing an exemplary configuration of the printer part according to an embodiment of the present invention;
Fig.9 is a flowchart showing steps of an image forming operation executed by an image reading part and an embedded pattern recognition part according to a second embodiment of the present invention; and
Fig.10 is a flowchart showing steps of an image forming operation executed by an image reading part and an embedded pattern recognition part according to a third embodiment of the present invention.

In the following, embodiments of the present invention are described with reference to the accompanying drawings.

In a case where the image forming apparatus according to an embodiment of the present invention determines that a target document is a copy-prohibited document, the image forming apparatus discharges a transfer sheet without forming a latent image on a photoconductor with toner.

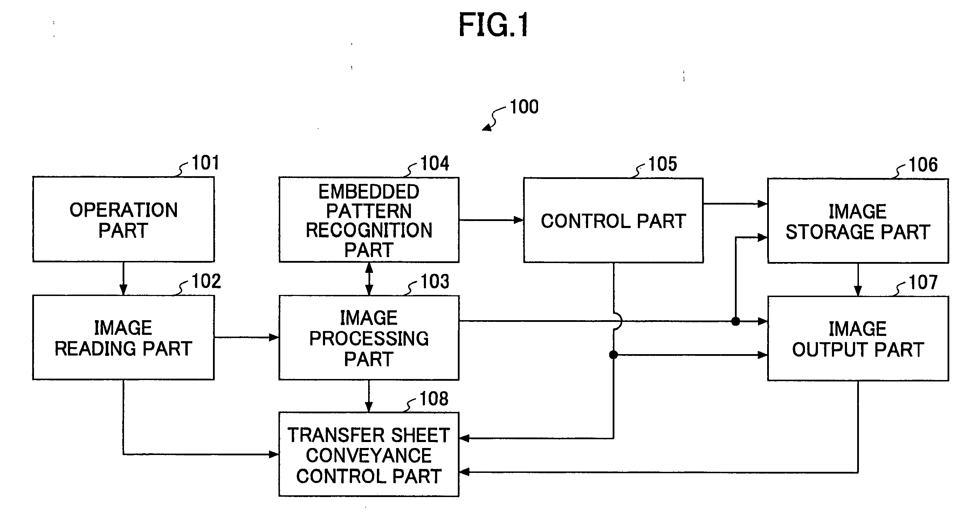

Fig.1 is a block diagram showing an exemplary configuration of an image forming apparatus 100 according to an embodiment of the present invention.

The image forming apparatus 100 includes, for example, an operation part 101, an image reading part 102, an image processing part 103, an embedded pattern recognition part 104, a control part 105, an image storage part 106, an image output part 107, and a transfer sheet conveyance control part 108.

The operation part 101 detects pressing of a "copy" button (not shown). The operation part 101 also receives a selection for an embedded pattern recognition mode or an embedded pattern recognition cancel mode. The embedded pattern recognition mode (also referred to as image determination mode) is a mode in which the below-described embedded pattern recognition part 104 performs an embedded pattern recognition process on the image data read by the image reading part 102. Furthermore, the embedded pattern recognition cancel mode is a mode in which an image forming process is executed without having the embedded pattern recognition part 104 perform the embedded pattern recognition process. That is, read image data is output from the image output part 107 without the execution of the embedded pattern recognition process. An embedded pattern according to an embodiment of the present invention may be, for example, a pattern (or character strings) that is pre-embedded in a target document. For example, warnings such as "Do Not Copy" or "Copying Prohibited" may be pre-embedded as character strings in documents and when an attempt is made to copy the document, the embedded information (pattern) can appear conspicuously on the document when it is output on a copier.

The image reading part 102 reads a target document with a scanner and converts the data of the read out image into digital image data. Furthermore, the image reading part 102 also determines whether the current mode of the pattern recognition part (image determination part) 104 is in the embedded pattern recognition mode or the embedded pattern recognition cancel mode.

The image processing part 103 performs a binarization process (or a multi-value process) on the image data read out by the image reading part 102 by performing a process such as γ correction or MTF correction on the read out image data and then performing a gradation process (e.g. slice process, dither process) on the processed data.

The embedded pattern recognition part 104 (in a case where the mode is set to the embedded pattern recognition mode by the operation part 101) determines whether the read out data of the target document include copy-prohibited image data (i.e. output prohibited data) by performing matching between the read out image data binarized by the image processing part 103 and copy-prohibited patterns. It is to be noted that the embedded pattern recognition part 104 may also be referred to as an image determination part. The embedded pattern recognition part 104 not only recognizes embedded patterns but may also recognize other patterns, characters, symbols, etc., that are prohibited from being copied. Accordingly, the embedded pattern recognition part 104 can determine whether the target document is a copy-prohibited document (e.g. bank note, confidential document).

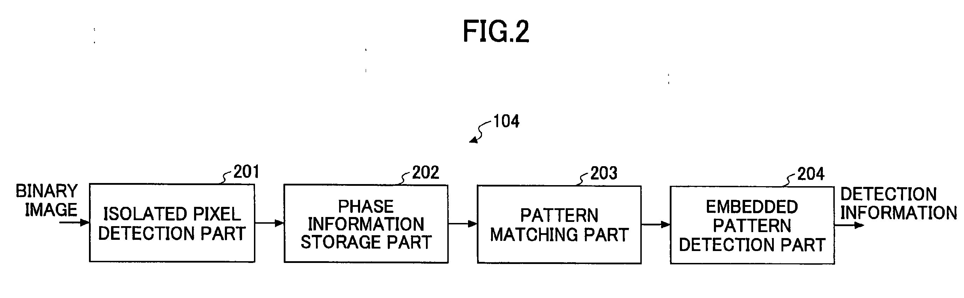

The embedded pattern recognition part 104 further includes, for example, an isolated pixel detection part 201, a phase information storage part 202, a pattern matching part 203, and an embedded pattern detection part 204. Fig.2 is a block diagram showing an exemplary configuration of the embedded pattern recognition part 104.

The isolated pixel detection part 201 detects an isolated pixel(s) situated within a predetermined area. The phase information storage part 202 stores position information of the isolated pixel(s) detected by the isolated pixel detection part 201 and corresponding image data.

Based the position information of the isolated pixels stored in the phase information storage part 202, the pattern matching part 203 performs pattern matching by using predetermined embedded patterns. The pattern matching part 203 transmits the results of the pattern matching to the embedded pattern detection part 204. The embedded pattern detection part 204 determines whether an embedded pattern(s) is recognized based on the transmitted results from the pattern matching part 203.

With reference to Fig.1, in a case where the operation part 101 sets the mode of the embedded pattern recognition part 104 to the embedded pattern recognition mode, the control part 105 stores image data in the image storage part 106. Furthermore, in a case where the embedded pattern recognition part 104 determines that the target document is a copy-prohibited document, the control part 105 instructs the image output part 107 not to apply toner to the photoconductor on which a latent image is formed. Alternatively, in a case where the embedded pattern recognition part 104 determines that the target document is a copy-prohibited document, the control part 105 may instruct the image output part 107 not to form a latent image on the photoconductor. In other words, the control part 105 instructs the image output part 107 not to output the read image data of the target document.

Meanwhile, in a case where the embedded pattern recognition part 104 determines that the target document is not a copy-prohibited document (printing-prohibited document), the control part 105 commands the image output part 107 to output the read image data of the target document, for example, by forming a latent image on the photoconductor, applying toner to the latent image, and transferring/fixing the toner image onto a transfer sheet.

In such case where the mode of the embedded pattern recognition part 104 is set to the embedded pattern recognition mode by the operation part 101, the image storage part 106 temporarily stores, for example, read image data processed by the image processing part 103.

Furthermore, in such case where the mode of the embedded pattern recognition part 104 is set to the embedded pattern recognition mode by the operation part 101, the image output part 107 outputs the processed image data (processed by the image processing part 103) stored in the image storage part 106 when the image data of the target document are determined as having no pattern embedded therein. On the other hand, in a case where the mode of the embedded pattern recognition part 104 is set to the embedded pattern recognition cancel mode by the operation part 101, the image reading part 102 reads the target document, then the image processing part 103 processes the image data read out from the target document, and then the image output part 107 outputs the processed image data.

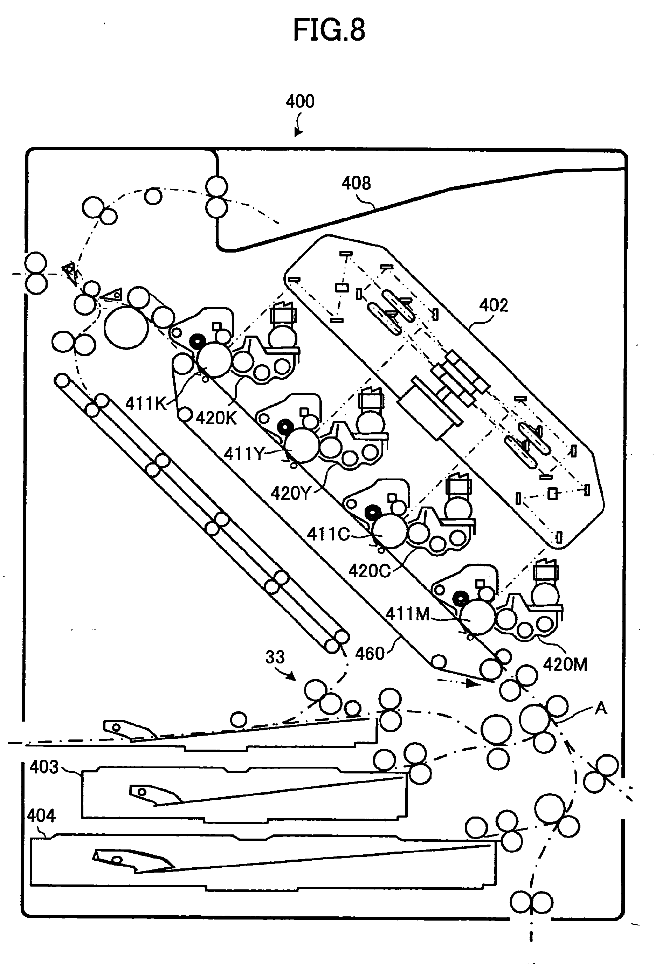

More specifically, the output of image data is performed as follows. First, a latent image is formed on a photoconductor (411 in Fig.8) by scanning of a deflected light beam based on image data processed by the image processing part 103. Then, the latent image formed on the photoconductor is developed with toner. Then, the developed toner image is transferred and fixed onto a transfer sheet. Thereby, the image is formed on the transfer sheet. The output process is performed by using, for example, electrophotographic technology.

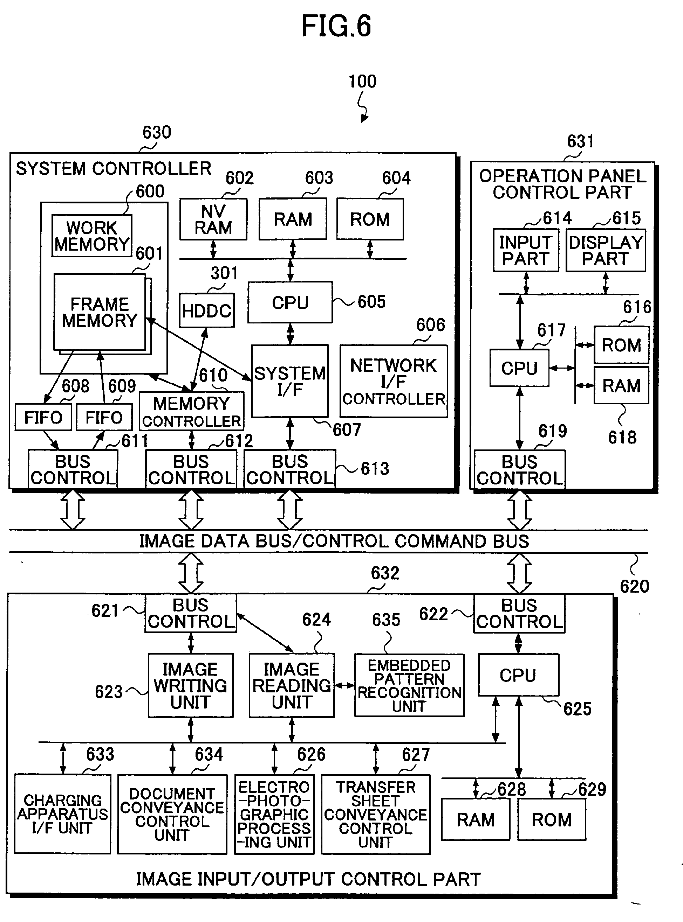

The transfer sheet conveyance control part 108 controls the conveying of the transfer sheet for transferring the toner image to the transfer sheet in the image output part 107. More specifically, the control process of the transfer sheet conveyance control part 108 is performed by conveying the transfer sheet with use of the below-described document conveyance control unit 634 (In Fig.6).

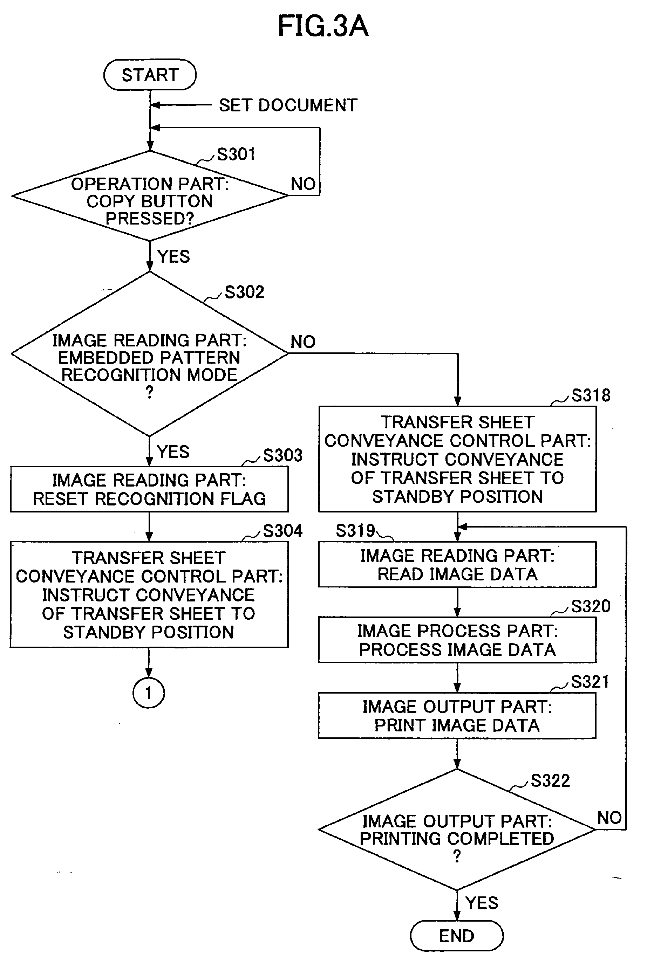

Next, an embodiment of an image forming process using the above-described image forming apparatus 100 is described. Figs.3A-3C are flowcharts showing steps of an image forming process (image forming operation) performed by using the operation part 101, the image reading part 102, the transfer sheet conveyance control part 108, the embedded pattern recognition part 104, the control part 105, and the image output part 107.

First, a target document is placed on the image forming apparatus 100 by the user. The operation part 101 determines whether the copy button is pressed (Step S301). In a case where the operation part 101 determines that the copy button is not pressed (No in Step S301), the operation returns to the beginning of Step S301 to wait for the copy button to be pressed.

In a case where the operation part 101 determines that the copy button is pressed (Yes in Step S301), the image reading part 102 determines whether the current mode is the embedded pattern recognition mode (Step 5302). In a case where the image reading part 102 determines that the current mode is the embedded pattern recognition mode (Yes in Step S302), the image reading part 102 resets a recognition flag (Step S303). In this embodiment, the recognition flag is a flag for indicating whether an embedded pattern(s) is recognized (read out) from the image data read by the image reading part 102. For example, a value indicating "ON" is set in a case where an embedded pattern is recognized and a value indicating "OFF" is set in a case where no embedded pattern is recognized. In this case, resetting the recognition flag may be setting the flag as null.

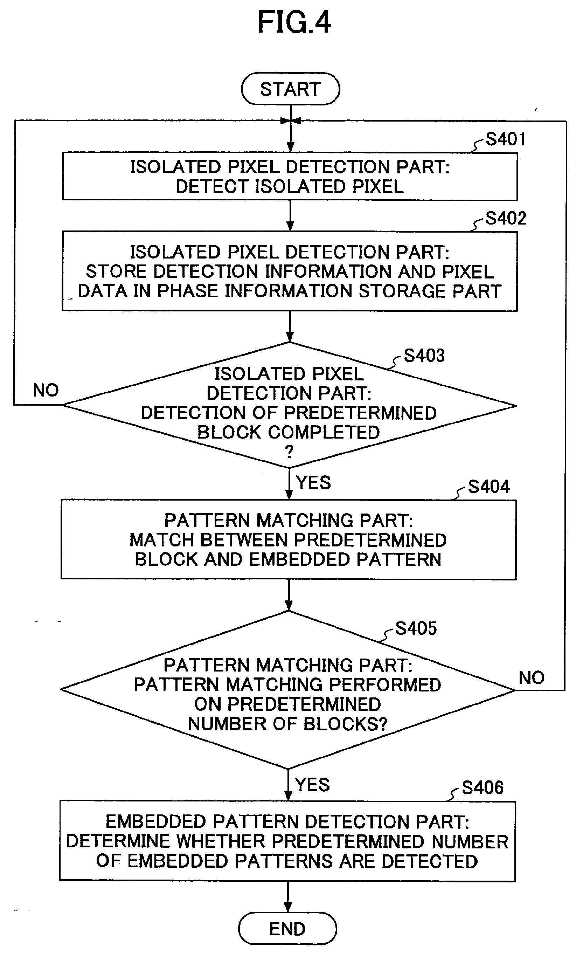

Then, the transfer sheet conveyance control part 108 instructs that the transfer sheet be conveyed to a standby position (Step S304). Accordingly, the transfer sheet is conveyed to the standby position. Then, the image reading part 102 reads out image data from the target document (Step S305). Then, the image processing part 103 performs image processing on the read out image data (Step S306). Then, the image processing part 103 stores the processed image data in the image storage part (Step S307). In addition, the embedded pattern recognition process is performed based on the processed image data (Step 5308). The embedded pattern recognition process is performed on the read out image data in a part by part manner. This means that the embedded pattern recognition process is performed based on predetermined partial units (e.g. units in which image data can be read, units in which embedded patterns can be recognized, or sheet by sheet in a case of reading plural documents). Details of the embedded pattern recognition process are described below with reference to Fig.4.

The embedded pattern recognition part 104 determines whether an embedded pattern is detected (Step S309). In a case where the embedded pattern recognition part 104 determines that an embedded pattern is detected (Yes in Step S309), the recognition flag is set to ON (Step S310). In a case where the embedded pattern recognition part 104 determines that an embedded pattern is not detected (No in Step S309), the operation proceeds to Step S311 without performing a particular setting on the recognition flag. Or the recognition flag may be set to OFF. Then, the image reading part 102 determines whether the reading of the target document is completed (S311). In a case where the reading of the target document is not completed (No in Step S311), the operation returns to Step S305 for continuing the process of reading image data from the target document. In a case where reading the target document is completed (Yes in Step S311), the control part 105 determines whether the recognition flag is ON (Step S312). That is, in a case where the read document is determined not to be a copy-prohibited document, the image output part 107 obtains the read out image data from the image storage part 106 (Step S313). The image output part 107 prints out the obtained image data (Step S314).

Then, the image output part 107 determines whether the output of the image data is completed (Step S315). In a case where the image output part 107 determines that the output of the image data is not completed (No in Step S315), the operation returns to Step S313 for obtaining image data. In a case where the image output part 107 determines that the output of the image data is completed (Yes in Step S315), the operation is finished.

Meanwhile, in Step S312, when the control part 105 determines that the recognition flag is ON (Yes in Step S312), that is, when the read out image data of the target document are determined to be image data of a copy-prohibited document, the control part 105 prevents toner from being applied to the photoconductor (Step S316). In another embodiment, as an alternative for preventing toner from being applied onto the photoconductor, a latent image may be prevented from being formed on the photoconductor. This embodiment also prevents toner from being unnecessarily applied to the photoconductor. Then, the transfer sheet, which is being conveyed to the standby position, is ejected under the control of the transfer sheet conveyance control part 108 (Step S317). Thereby, the operation is finished.

Therefore, according to the above-described embodiment of the present invention, in a case where the embedded pattern recognition mode is ON, the image data of the target document will be stored in the image storage part 106 and not transmitted to the image writing unit 623 until all of the image data are read out and the determination of whether the target document is a copy-prohibited document is completed. Accordingly, the read out image data of the target document are transmitted to the image writing unit 623 and printed out when it is determined that none of the read out image data are copy-prohibited image data. That is, the read out image data of the target document are transmitted to the image writing unit 623 and printed out at the timing of determining that none of the read out image data are copy-prohibited image data.

Furthermore, with the above-described embodiment of the present invention, the steps of forming a latent image on the photoconductor and developing the latent image by applying toner onto the photoconductor can be prevented from being executed in a case where the target document is a copy-prohibited document. Thereby, toner can be prevented from being wasted. In the above-described embodiment of the present invention, the conveying of the transfer sheet to the standby position is started before the determining of whether the target document is a copy-prohibited document so that image data can be promptly output once they are determined not to be copy-prohibited data. Alternatively, conveying the transfer sheet to the standby position may be performed after the determination is completed. Accordingly, owing to the fact that the transfer sheet is not yet conveyed to the standby position when the determination is completed, the step of discharging the transfer sheet can be omitted.

In a case where the embedded pattern recognition mode is not ON (No in Step S302), the transfer sheet conveyance control part 108 instructs that the transfer sheet be conveyed to the standby position (Step S318). Accordingly, the transfer sheet is conveyed to the standby position.

Then, the image reading part 102 reads out image data from the target document (Step S319). Then, the image processing part 103 performs image processing on the read out image data (Step S320). Then, the image output part 107 prints out the processed image data (Step S321). The image output part 107 determines whether the printing out of the image data is completed (Step S322). In a case where the image output part 107 determines that the printing out of the image data is completed (Yes in Step S322), the operation is finished. In a case where the image output part 107 determines that the printing out of the image data is not completed (No in Step S322), the operation returns to Step S319 for reading out image data.

In a case where the embedded pattern recognition mode is OFF, image data items are successively transmitted to the writing unit 623 once they are read by the image reading part 102 rather than being transmitted after all of the image data items are read by the image reading part 102. Thereby, the transmitted image data items are successively printed. Accordingly, in a case where the embedded pattern recognition mode is OFF, the image data are printed immediately after they are read out by the image reading part 102. Thus, image data can be printed rapidly.

Next, the embedded pattern recognition process performed by the embedded pattern recognition part 104 in Step S308 is described. Fig.4 is a flowchart showing the embedded pattern recognition process (operation) performed by the embedded pattern recognition part 104 according to an embodiment of the present invention.

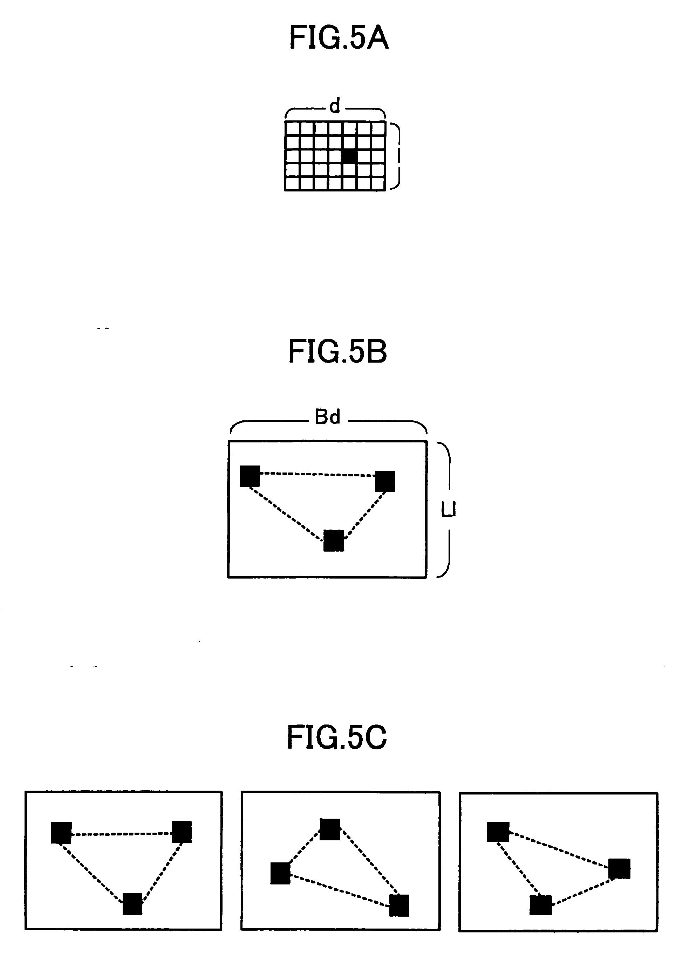

First, the isolated pixel detection part 201 detects one or more isolated pixels (Step S401). Fig.5A is a schematic drawing for describing an example of detecting isolated pixels in a block of an image data item having d pixels in a main scanning direction and l lines in the sub-scanning direction (d×l). In the example shown in Fig.5A, the isolated pixel detection part 201 detects isolated pixels in each block having d pixels in the main scanning direction and 1 lines in the sub-scanning direction.

Then, the isolated pixel detection part 201 stores position information of detected isolated pixels and corresponding image data in the phase information storage part 202 (Step S402). The isolated pixel detection part 201 determines whether the detection process for a predetermined block of an image data item is completed (Step S403). Fig.5B is a schematic drawing for describing an example of detecting isolated pixels in a block having Bd × Ll pixels. In the example shown in Fig.5B, the isolated pixel detection part 201 determines whether the process of detecting isolated pixels in a block having B pixels in the main scanning direction and L pixels in the sub-scanning direction is completed.

In a case where the isolated pixel detection part 201 determines that the detecting process for a predetermined block of an image data item is not completed (No in Step S403), the operation returns to Step S401 for detecting isolated pixels. In a case where the isolated pixel detection part 201 determines that the detecting process for a predetermined block of an image data item is completed (Yes in Step S403), the pattern matching part 203 performs pattern matching between the predetermined block and an embedded pattern (Step S404). Fig.5C is a schematic drawing showing exemplary embedded patterns. In the example shown in Fig.5C, the pattern matching part 203 performs pattern matching between the isolated pixels in the block of Bd × Ll pixels and the three types of embedded patterns so as to determine whether a corresponding embedded patterns is situated in the block of Bd × L1 pixels.

The pattern matching part 203 determines whether pattern matching is performed on a predetermined number of blocks (Step S405). In a case where the pattern matching part 203 determines that pattern matching is not performed on a predetermined number of blocks (No in Step S405), the operation returns to Step S401. In a case where the pattern matching part 203 determines that pattern matching is performed on a predetermined number of blocks (Yes in Step S405), the pattern detection part 104 determines whether a predetermined number of embedded patterns are detected (Step S406).

Next, an exemplary hardware configuration of the above-described image forming apparatus performing the above-described image forming process is described. Fig.6 is a schematic drawing showing an exemplary hardware configuration of an image forming apparatus according to an embodiment of the present invention.

The image forming apparatus 100 includes a system controller 630, an operation panel control part 631, and an image input/output control part 632. The system controller 630, the operation panel control part 631, and the image input/output control part 632 perform data communications with each other via an image data bus/control command bus 620.

The system controller 630 performs overall control of the system including the image forming apparatus 100 and functions as a single application and/or multiple applications including, for example, a scanner application, a copy application, a facsimile application, and a printer application. The operation panel control part 631 displays input for various settings of the system and the status of the system. The image input/output control part 632 serves to read the image data of a target document and write image data to a transfer sheet by using, for example, an electrophotographic method.

The image data bus/control command bus 620 is a bus for transferring image data and control commands by time-sharing. The system controller 630, the operation panel control part 631, and the image input/output control part 632 exchange image data and control commands among each other via the image data bus/control command bus 620. The bus control parts 611, 612, 613, 619, 621, and 622, which are respectively provided in the system controller 630, the operation panel control part 631, and the image input/output control part 632, correspondingly control the system controller 630, the operation panel control part 631, and the image input/output control part 632.

Next, the system controller 630 is described in further detail. The CPU 605 controls the system controller 630. A program for controlling the system controller 630 is written, for example, in the ROM 604. The RAM 603 is a memory used as a working space by the CPU 605. The NVRAM 602 is a non-volatile memory for storing information of the entire system. The network I/F controller 606 is for controlling connection with a network.

The system I/F 607 is for controlling the transfer of facsimile data, printer data that are to be processed in the system in accordance with commands from the CPU 605. The work memory 600 is a memory used as a working space for processing an image used by the printer. The frame memory 601 is a memory used as a working space for storing image data of read out images and images to be written. The image data includes, for example, encoded data or dot images.

The FIFO buffer 609 performs conversion of data transfer rates when inputting data to the frame memory 601. Likewise, the FIFO buffer 608 performs conversion of data transfer rates when outputting data from the frame memory 601.

The memory controller 610 controls the frame memory 601 and the input/output of data with respect to the HDDC 650 and the bus 620 without being controlled by the CPU 605. The HDDC 650 includes a HDD controller for controlling image data input to/output from the HDD. The HDD stores images read out from the image read out unit 624 and images obtained via the network.

Next, the operation panel control part 631 is described in further detail. The CPU 617 controls the operation panel control part 631. A program for controlling the operation panel control part 631 is written, for example, in the ROM 616. The RAM 618 is a memory used as a working space by the CPU 617. An input part 614 is for inputting system settings that are input by the user. A display part 615 is for displaying settings of the system and the status of the settings to the user.

Next, the image input/output control part 632 is described in further detail. The CPU 625 controls the image input/output control part 632. A program for controlling the image input/output control part 632 is written to the ROM 629. The RAM 628 is a memory used as a working space for the CPU 625.

The image writing unit 623 includes, for example, a unit for controlling an optical writing apparatus that irradiates a laser beam of a predetermined frequency and performs scanning with a polygon mirror scanner. The image reading unit 624 includes, for example, a unit for controlling an optical scanner that reads a target document with a CCD in accordance with reflected light. The image reading unit 624 performs an image process for separating visible and invisible identifiers from the image data of a target document. The identifiers separated by the image reading unit 624 are encoded by the CPU 625 and transmitted to the system controller 630 for identifying image processing apparatuses and computers in the network.

The documents, which are to be read by the image reading unit 624, are conveyed sheet by sheet by the document conveyance control unit 634. The document conveyance control unit 634 also detects the size of the documents. The electrophotographic processing unit 626 uses an electrophotographic method. The electrophotographic method is performed, for example, by forming a latent image on a photoconductor by irradiating a laser beam onto the photoconductor and forming a toner image by applying toner to the latent image formed on the photoconductor, and transferring/fixing the toner image onto a sheet.

The transfer conveyance control unit 627 conveys the sheet onto which the toner image is transferred by the electrophotographic processing unit 626. A charging (billing) apparatus I/F unit 633 serves to connect the image input/output control part 632 and a charging apparatus (billing apparatus). The charging apparatus I/F unit 633 converts the commands from the CPU 625 into signals dedicated for the interface of the charging apparatus. The charging apparatus I/F unit 633 transmits/receives signals with respect to the charging apparatus for exchanging information indicative of, for example, printing conditions, billing status, etc.

The embedded pattern unit 635 performs embedded pattern recognition. The image reading unit 624 sends binary image data (two-level image data) to the embedded pattern recognition unit 635. The embedded pattern recognition unit 635 sends the results of the embedded pattern recognition to the image reading unit 624. Based on the embedded pattern recognition results and the instructions from the CPU 625, the image reading unit 624 processes the image data of the target document by applying a predetermined gradation and phase to the image data for making the image data undecipherable (i.e. indecipherable image data).

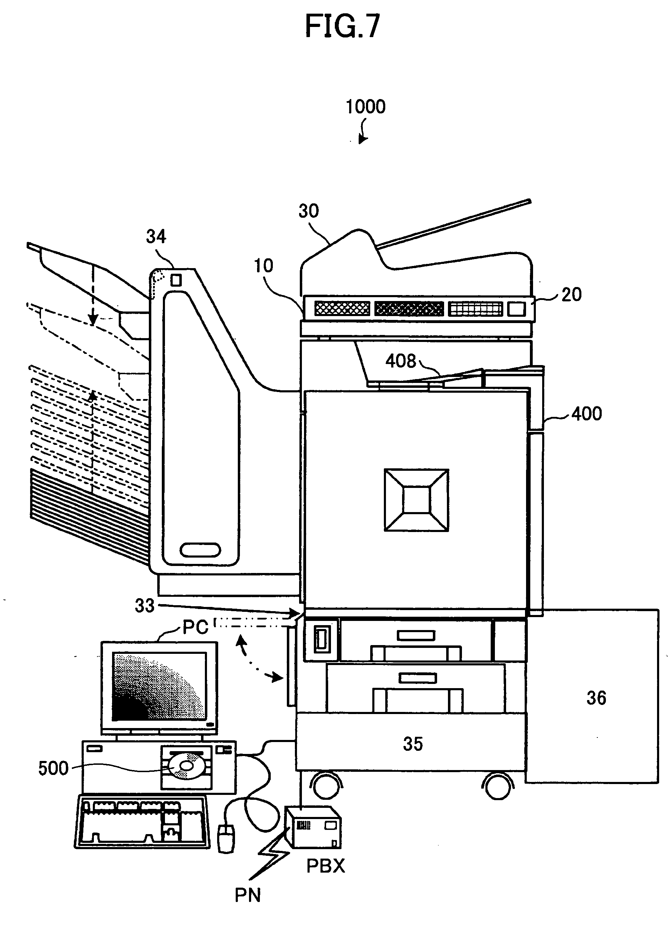

Fig.7 is an outside view of a copier 1000 including an image forming apparatus according to an embodiment of the present invention. The copier 1000 includes, for example, a scanner 10, a control board 20, an ADF (Automatic Document Feeder) 30, a double-side drive unit 33, a document finisher 34, a sheet feed compartment, a large size sheet feed tray 36, and a printer part 400.

Next, the printer part 400 is described in further detail. Fig.8 is a schematic view showing an exemplary configuration of the printer part 400. The printer part 400 includes, for example, an image writing unit 402, a first sheet supply tray 403, a second sheet feed tray 404, an inside sheet discharge part 408, a photoconductor 411 (411K, 411Y, 411C, 411M), a developing unit 420 (420K, 411Y, 411C, 411M), and a conveyor belt 460. The transfer sheet conveyance unit 627 conveys a transfer sheet to a standby position A in accordance with the instructions from the above-described transfer sheet conveyance control part 108. Then, the image writing unit 402 forms a latent image on the photoconductor 411 in accordance with the instructions from the CPU. Then, toner is applied to the photoconductor 411 by the developing unit 420. Then, the transfer sheet, which is already positioned at the standby position A, is conveyed by the conveyor belt 460 for allowing the toner image on the photoconductor 411 to be formed onto the transfer sheet.

The image forming program executed by the image forming apparatus 100 according to an embodiment of the present invention may be installed beforehand in its ROM, for example. The image forming program may also be provided in the form of a computer-readable recording medium 500 (e.g. a CD-ROM, a flexible disk (FD), a CD-R, a DVD) so that it can be installed, for example, in a personal computer (PC) and executed by the image forming apparatus 100 according to an embodiment of the present invention (See Fig.7).

Furthermore, the image forming program may also be provided, for example, in a downloadable form via a network (e.g. Internet) so that it can be installed and executed by the image forming apparatus connected to the network.

The image forming program according to an embodiment of the present invention may be recorded to a computer-readable recording medium. The image forming program may include, for example, modules corresponding to the above-described operation part, the image reading part, the transfer sheet conveyance control part, the embedded pattern recognition part, the control part, and the image output part. For example, the CPU (processor) reads out the image forming program from the ROM and loads information of the foregoing respective parts into the memory (main memory) so that the operation part, the image reading part, the transfer sheet conveyance control part, the embedded pattern recognition part, the control part, and the image output part can be generated in the memory.

According to a second embodiment of the present invention, the image data stored in the image storage part may be overwritten with a cover-up pattern (e.g. black color data) in a case where an embedded pattern is recognized (detected). In the second embodiment of the present invention, the control part 105 (other than having the above-described configuration and functions) may overwrite the image data stored in the image storage part 106 with a cover-up pattern when the embedded pattern recognition part 104 detects an embedded pattern in the target document. In the second embodiment of the present invention, the control part 105 includes an image changing part.

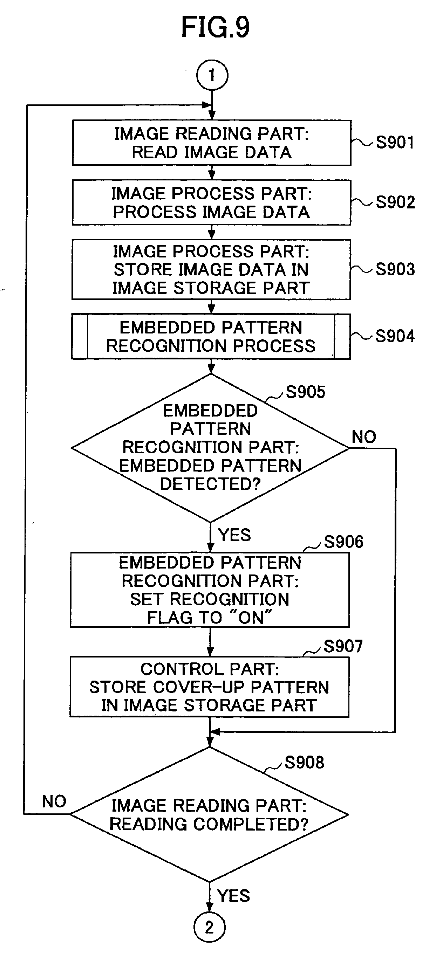

Next, an image forming process using the above-described image forming apparatus 100 according to the second embodiment of the present invention is described. Fig.9 is a flowchart showing the steps of an image forming process (image forming operation) performed by using the image forming apparatus including the image reading part and the embedded pattern recognition part.

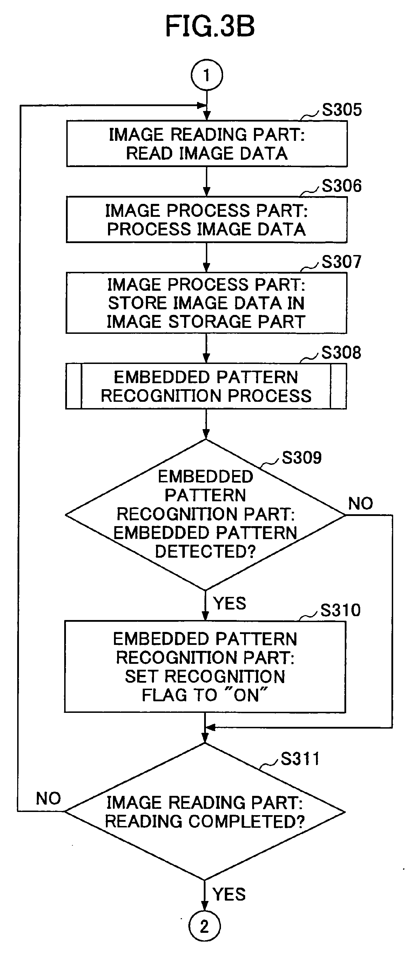

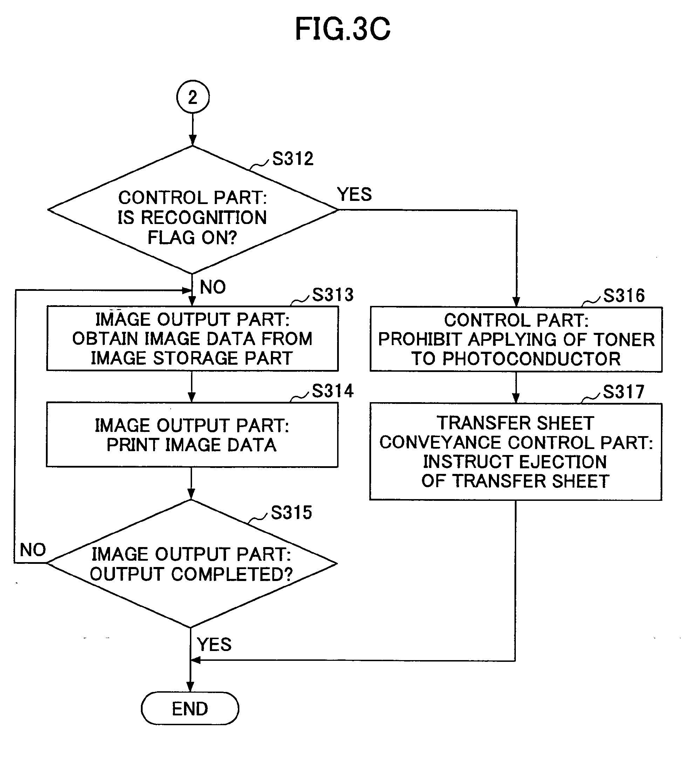

The steps before and after the process shown in Fig.9 are substantially the same as those shown in Figs.3A, 3C. Therefore, further description of the steps is omitted. Moreover, the below-described Steps S901 to S906 and Step S908 of Fig.9 are substantially the same as Steps S305 to S311 of Fig.3B. Therefore, further description of the steps is omitted.

In a case where an embedded pattern is detected in the read out image data of the target document by the embedded pattern recognition part 104, the control part 105 stores a cover-up pattern in the image storage part 106 (Step S907). That is, in a case where an embedded pattern is detected from the read out image data of a target document and the target document is determined as a copy-prohibited document, the read out image data of the target document being already stored (temporarily) in the image storage part 106 are overwritten by replacing the image data with a cover-up pattern (for example, a black color pattern for covering a predetermined part of the copy-prohibited document) whenever the target document is determined to be a copy-prohibited document.

Accordingly, since a cover-up pattern is stored in the image storage part 106 at the time of detecting an embedded pattern in a target document, valid image data will not be obtained even in a case where access is made to the copy-prohibited target document, for example, by an unauthorized person. Therefore, copy-prohibited documents can be managed under high security. In addition, since the recognition flag is ON when the target document is a copy-prohibited document, the steps of forming a latent image on the photoconductor and applying toner to the photoconductor are not executed. Therefore, toner can be prevented from being wasted.

According to a third embodiment of the present invention, the image data stored in the image storage part 106 may be erased in a case where an embedded pattern is recognized (detected). In this third embodiment of the present invention, the control part 105 (other than having the above-described configuration and functions) may erase the image data stored in the image storage part 106 when the embedded pattern recognition part 104 detects an embedded pattern in a target document. In the third embodiment of the present invention, the control part 105 includes an image erasing part.

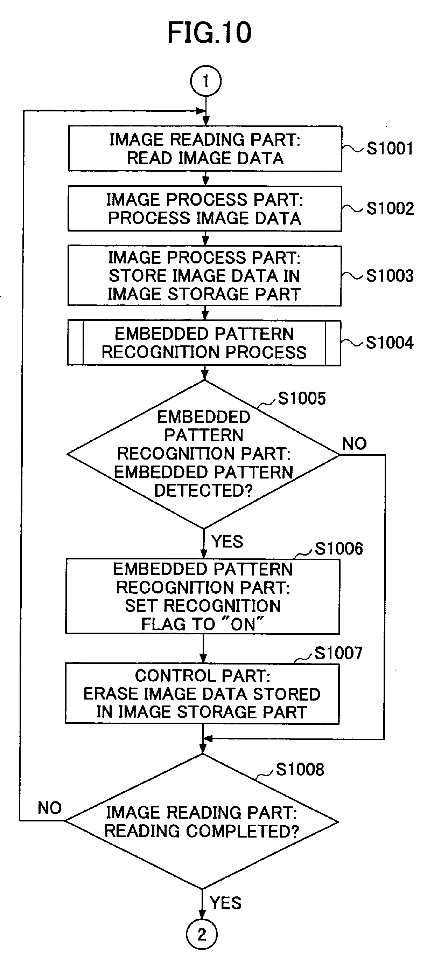

Next, an image forming process using the above-described image forming apparatus 100 according to the third embodiment of the present invention is described. Fig.10 is a flowchart showing the steps of an image forming process (image forming operation) performed by using the image forming apparatus including the image reading part and the embedded pattern recognition part.

The steps before and after the process shown in Fig.10 are substantially the same as those shown in Figs.3A, 3C. Therefore, further description of the steps is omitted. Moreover, the below-described Steps S1001 to S1006 and Step S1008 of Fig.10 are substantially the same as Steps S305 to S311 of Fig.3B. Therefore, further description of the steps is omitted.

In a case where an embedded pattern is detected in the read out image data of the target document by the embedded pattern recognition part 104, the control part 105 erases the image data stored in the image storage part 106 (Step S1007). That is, in a case where an embedded pattern is detected from the read out image data of a target document and the target document is determined to be a copy-prohibited document, the read out image data of the target document being already stored (temporarily) in the image storage part 106 are erased whenever the target document is determined to be a copy-prohibited document.

Accordingly, since the image data stored in the image storage part 106 are erased at the time of detecting an embedded pattern in a target document, valid image data will not be obtained even in a case where access is made to the copy-prohibited target document, for example, by an unauthorized person. Therefore, copy-prohibited documents can be managed under high security. In addition, since the recognition flag is ON when the target document is a copy-prohibited document, the steps of forming a latent image on the photoconductor and applying toner to the photoconductor are not executed. Therefore, toner can be prevented from being wasted.

Further, the present invention is not limited to these embodiments, but variations and modifications may be made without departing from the scope of the present invention.

## Claims

1. An image forming apparatus for forming an image on a transfer sheet by transferring a toner image or a latent image on a photoconductor to the transfer sheet, the image forming apparatus **characterized by** comprising:
an image reading part for reading image data from a target document;
an image determination part for determining whether the image data read by the image reading part include output prohibited data; and
a control part for preventing application of toner to the photoconductor or for a preventing formation of the latent image on the photoconductor when the image determination part determines that the image data read by the image reading part include the output prohibited data.

2. The image forming apparatus as claimed in claim 1, further **characterized by** comprising:
a transfer sheet conveyance control part for conveying the transfer sheet to a standby position when the image reading part begins reading image data from the target document;
wherein the control part instructs the transfer sheet conveyance control part to eject the transfer sheet without transferring the image data to the transfer sheet in a case where the control part prevents the application of toner.

3. The image forming apparatus according to either claim 1 or claim 2, further **characterized by** comprising:
an image output part for outputting the image data read by the image reading part in a case where the image determination part determines that the image data read by the image reading part do not include output prohibited data.

4. The image forming apparatus according to any one of the preceding claims, further **characterized by** comprising:
a mode determination part for determining whether the image determination part is in an image determination mode for determining whether the image data are output prohibited data; and
an image storage part for storing the image data read by the image reading part in a case where the mode determination part determines that the image determination part is in the image determination mode;
wherein the control part prevents the application of the toner that corresponds to the image data stored in the image storage part in a case where the image determination part determines that the image data are output prohibited data.

5. The image forming apparatus as claimed in claim 4, **characterized in that** the control part permits the application of toner in a case where the mode determination part determines that the image determination part is not in the image determination mode.

6. The image forming apparatus according to either claim 4 or claim 5, further **characterized by** comprising:
an image changing part for changing the image data stored in the image storage part into indecipherable image data in a case where the image determination part determines that the image data include output prohibited data.

7. The image forming apparatus as claimed in claim 6, **characterized in that** the image determination part determines whether the image data include output prohibited data with respect to each part of the target document, wherein when the image determination part determines that a predetermined part of the target document includes output prohibited data, the image changing part changes the image data corresponding to the predetermined part of the target document into indecipherable image data.

8. The image forming apparatus according to either claim 6 or claim 7, **characterized in that** the image changing part changes the image data stored in the image storage part into indecipherable image data by overwriting the image data with black color data.

9. The image forming apparatus according to any one of claims 4 to 8, further **characterized by** comprising an image erasing part for erasing the image data stored in the image storage part in a case where the image determination part determines that the image data include output prohibited data.

10. The image forming apparatus as claimed in claim 9, **characterized in that** the image determination part determines whether the image data include output prohibited data with respect to each part of the target document, wherein when the image determination part determines that a predetermined part of the target document include output prohibited data, the image erasing part erases the image data corresponding to the predetermined part of the target document.

11. An image forming method for forming an image on a transfer sheet by transferring a toner image or a latent image on a photoconductor to the transfer sheet, the image forming method **characterized by** comprising the steps of:
a) reading image data from a target document;
b) determining whether the image data read in step a) include output prohibited data; and
c) preventing application of toner to the photoconductor or preventing formation of the latent image on the photoconductor when the image data read in step a) are determined to include output prohibited data.

12. A computer program comprising program code means that, when executed on a computer system, instructs an apparatus to carry out the steps according to claim 11.

13. A computer readable storage medium having recorded thereon program code means that, when executed on a computer system, instructs an apparatus to carry out the steps according to claim 11.
